# EUROPÄISCHE PATENTANMELDUNG

(11) **EP 3 957 462 A1**
(43) Veröffentlichungstag der Anmeldung: **23.02.2022**
(21) Anmeldenummer: 20191403.3
(22) Anmeldetag: 17.08.2020
(51) Int. Cl.: B29C 51/06, B29C 51/12, B29L 31/00, B29C 51/08, B29C 51/14, B29C 51/26, B29C 70/68, B29K 105/08

(54) **HERSTELLUNGSVERFAHREN FÜR EINE HALBSCHALE**

(71) Anmelder: Magna Energy Storage Systems GesmbH, 8261 Sinabelkirchen (AT)
(72) Erfinder: DREBES, Mario, 92369 Sengenthal (DE)
(74) Vertreter: Zangger, Bernd

(57) **Zusammenfassung**

Ein Verfahren zur Herstellung einer Halbschale für einen Hohlkörper, wobei ein Werkzeug verwendet wird mit einer ersten Werkzeughälfte (1), die eine Matrize bildet, umfassend die Schritte:
- eine vorgeheizte Kunststoffplatte (2) wird auf die erste Werkzeughälfte (1) aufgebracht,
- die Kunststoffplatte (2) wird zumindest bereichsweise mittels Unterdruck oder Druck an die erste Werkzeughälfte (1) gesaugt oder gepresst,
- die Kunststoffplatte (2) wird, bevor sie an die erste Werkzeughälfte (1) gesaugt oder gepresst wird, zumindest bereichsweise mittels Druck oder Unterdruck von der ersten Werkzeughälfte (1) weggeblasen oder weggesaugt, um das Material der Kunststoffplatte (2) zumindest bereichsweise vorzustrecken.

## Beschreibung

### Gebiet der Erfindung

Die vorliegende Erfindung betrifft ein Verfahren zur Herstellung einer Halbschale für einen Hohlkörper, insbesondere für einen Kraftfahrzeugtank.

### Stand der Technik

Es ist bekannt Hohlkörper, wie Tanks für Kraftfahrzeuge, aus zwei Halbschalen herzustellen, die an ihren Rändern aneinander gefügt werden. Für die Herstellung von Hohlkörpern sind verschiedene Technologien bekannt. Vor allem ist das Blasformen und Thermoformen von Kunststofftanks bekannt, wobei erwärmte Kunststoffplatten mittels Druckluft oder mittels Vakuum in eine Form gepresst werden, um die Halbschale auszuformen.

Je nach Form der Halbschale entstehen bei der Formgebung mehr oder weniger stark ausgedünnte Bereiche des Materials der Halbschale, da das Material beim Tiefziehen bzw. Ausformen auf unterschiedlich große Flächen verteilt wird. Die Ausdünnung verteilt sich daher in Abhängigkeit der finalen Geometrie des Bauteils ungleichmäßig über das Bauteil. Um unerwünscht dünne Bereiche der Halbschale zu vermeiden müssen daher entsprechend dicke Ausgangsplatten für die Umformung verwendet werden, die in weniger ausgedünnten Bereichen der Halbschale auch zu unnötig dicken Wandstärken der finalen Halbschale führen.

### Zusammenfassung der Erfindung

Es ist eine Aufgabe der Erfindung, ein Verfahren zur Herstellung einer Halbschale für einen Hohlkörper anzugeben, wobei unerwünscht dicke und dünne Bereiche des Materials der Halbschale vermieden werden.

Die Lösung der Aufgabe erfolgt durch ein Verfahren zur Herstellung einer Halbschale für einen Hohlkörper, wobei ein Werkzeug verwendet wird mit einer ersten Werkzeughälfte, die eine Matrize bildet, umfassend die Schritte:
- eine vorgeheizte Kunststoffplatte wird auf die erste Werkzeughälfte aufgebracht,
- die Kunststoffplatte wird zumindest bereichsweise mittels Unterdruck oder Druck an die erste Werkzeughälfte gesaugt oder gepresst,
- die Kunststoffplatte wird, bevor sie an die erste Werkzeughälfte gesaugt oder gepresst wird, zumindest bereichsweise mittels Druck oder Unterdruck von der ersten Werkzeughälfte weggeblasen oder weggesaugt, um das Material der Kunststoffplatte zumindest bereichsweise vorzustrecken.

Erfindungsgemäß wird eine Halbschale aus einer Kunststoffplatte ausgeformt. Die Kunststoffplatte wird dazu auf ein formgebendes Werkzeug, die erste Werkzeughälfte aufgebracht, beispielsweise gelegt. Danach wird, noch vor dem eigentlichen Ausformen der Halbschale, das Material der Kunststoffplatte nicht in die Form hinein gesaugt oder geblasen, sondern im Wesentlichen in der Gegenrichtung das Material der Kunststoffplatte, zumindest abschnittsweise, vom formgebenden Werkzeug weggeblasen oder in diese Gegenrichtung gesaugt. Hierdurch wird das Material gezielt in gewünschten Bereichen vorgestreckt, um in diesen Bereichen eine gewünschte Ausdünnung des Materials zu erreichen. Bevorzugt erfolgt bei der weiteren Formgebung, in der ersten Werkzeughälfte, eine Ausdünnung gerade in denjenigen Bereichen, welche beim Vor-Strecken weniger oder gar nicht gestreckt wurden und daher weniger oder gar nicht ausgedünnt wurden. Das gezielte bereichsweise Vor-Strecken des Materials der Kunststoffplatte kann insbesondere durch gezieltes Zurückhalten von anderen Bereichen der Kunststoffplatte während dem Vor-Strecken erfolgen, insbesondere mittels geeigneter Rückhalteelemente bzw. Schieber.

Auf diese Weise kann die Wanddicke und die insgesamt erreichte Ausdünnung von Wandbereichen der Halbschale gezielt beeinflusst werden. Es ist nicht nötig unerwünscht dicke Kunststoffplatten zu verwenden, die auch im fertigen Bauteil, der Halbschale oder dem insgesamt hergestellten Hohlkörper oder Behälter, unnötig dicke Wandbereiche bilden.

Das Aufbauen des Druckes kann insbesondere durch Aufbringen von Druckluft erfolgen, das Aufbauen eines Unterdrucks durch Anlegen eines Vakuums bzw. eines Unterdrucks.

Das Vorheizen der Kunststoffplatte kann vor dem Aufbringen der Kunststoffplatte auf die erste Werkzeughälfte erfolgen oder erst nach dem Aufbringen der Kunststoffplatte auf die erste Werkzeughälfte. Das Vorheizen der Kunststoffplatte kann dazu dienen, den Kunststoff aufzuweichen und besser formbar zu machen.

Weiterbildungen der Erfindung sind in den abhängigen Ansprüchen, der Beschreibung sowie den beigefügten Zeichnungen angegeben.

Vorzugsweise wird vor dem Wegblasen oder Wegsaugen der Kunststoffplatte von der ersten Werkzeughälfte, zumindest ein Rückhalteelement an der Kunststoffplatte angeordnet, insbesondere an die Kunststoffplatte bewegt, so dass Teilbereiche der Kunststoffplatte durch das Rückhalteelement zurückgehalten werden, so dass diese Teilbereiche der Kunststoffplatte beim Wegblasen oder Wegsaugen der Kunststoffplatte weniger oder nicht vorgestreckt werden.

Bevorzugt weist das Rückhalteelement, bzw. zumindest eines der Rückhalteelemente, eine umlaufende, geschlossene Form, insbesondere eine Ringform, auf, so dass die Teilbereiche der Kunststoffplatte, die beim Wegblasen oder Wegsaugen der Kunststoffplatte weniger oder nicht vorgestreckt werden, eine umlaufende, geschlossene Form aufweisen, insbesondere eine Ringform. Die Kontur des Rückhalteelements kann somit das Ausdünnen der Kunststoffplatte durch Vorstrecken gezielt beeinflussen, da Bereiche ausgewählt werden können, in welchen das Material der Kunststoffplatte weggeblasen oder weggesaugt wird oder nicht.

Bevorzugt weist die erste Werkzeughälfte eine Kavität auf, in welche die Kunststoffplatte zumindest bereichsweise mittels Unterdruck oder Druck gesaugt oder gepresst wird, wobei das Rückhalteelement um den Rand der Kavität umlauft. Innerhalb des Rückhalteelements kann der Druck oder Unterdruck aufgebaut werden. Teilbereiche der Kunststoffplatte, die außerhalb der Kavität liegen, werden dann beim Wegblasen oder Wegsaugen der Kunststoffplatte weniger oder nicht vorgestreckt.

Wenn die erste Werkzeughälfte eine Kavität aufweist, in welche die Kunststoffplatte zumindest bereichsweise mittels Unterdruck oder Druck gesaugt oder gepresst wird, ist das Rückhalteelement - oder eines der Rückhalteelemente - bevorzugt zentral über der Kavität angeordnet, so dass Teilbereiche der Kunststoffplatte, die zentral in der Kavität liegen, beim Wegblasen oder Wegsaugen der Kunststoffplatte weniger oder nicht vorgestreckt werden. Besonders bevorzugt kann ein zentrales Rückhalteelement mit einem Rückhalteelement kombiniert werden, dass eine umlaufende, geschlossene Form aufweist. Das Vorstrecken der Kunststoffplatte kann dann sowohl in einem radial außen liegenden Bereich als auch in einem radial zentral liegenden Bereich verringert oder vermieden werden, so dass ein Ringbereich zwischen diesen beiden wenig vorgestreckten Bereichen stärker vorgestreckt und ausgedünnt wird. Dieser stärker ausgedünnte Ringbereich kann beim nachfolgenden Formungsprozess beispielsweise den Großteil der Kavität der ersten Werkzeughälfte belegen und/oder den Großteil der hergestellten Halbschale bilden. Die hergestellte Halbschale kann dann Großteiles eine geringere Wandstärke aufweisen, als die Kunststoffplatte vor der Verarbeitung hatte. "Zentral über der Kavität" bedeutet dabei innerhalb eines Randes der Kavität. Bevorzugt verläuft das Rückhalteelement dabei um einen Mittelpunkt der Kavität in einer Draufsicht auf die Kavität. Das Rückhalteelement kann auch über einem sonstigen zurückzuhaltenden Bereich der Kavität angeordnet sein, so dass der Mittelpunkt des Rückhalteelements nicht am Mittelpunkt der Kavität liegt.

Bevorzugt umfasst das Werkzeug eine zweite Werkzeughälfte, die einen Stempel bildet und die zweiten Werkzeughälfte wird, vorzugsweise nach dem Saugen oder Pressen der Kunststoffplatte mittels Unterdruck oder Druck an die erste Werkzeughälfte, auf die erste Werkzeughälfte gefahren, um die innere Kontur der Halbschale auszubilden.

Die zweite Werkzeughälfte ist zum Zeitpunkt des Wegblasens oder Wegsaugens bevorzugt so positioniert, dass für Teilbereiche der Kunststoffplatte beim Wegblasen oder Wegsaugen der Kunststoffplatte der Weg durch die zweite Werkzeughälfte begrenzt wird, so dass diese Teilbereiche der Kunststoffplatte beim Wegblasen oder Wegsaugen der Kunststoffplatte weniger oder nicht vorgestreckt werden. Die zweite Werkzeughälfte kann somit auch als Rückhalteelement eingesetzt werden.

Gemäß einer Ausführungsform umfasst die Halbschale einen Einlegeteil, beispielsweise ein Bossteil, wobei der Kunststoff der Kunststoffplatte, nach dem Saugen oder Pressen des Kunststoffs mittels Unterdruck oder Druck an die erste Werkzeughälfte, bereichsweise hinter einer Hinterschneidung des Einlegeteils seitlich beabstandet vom Einlegeteil angeordnet ist.

Danach, also nach dem Saugen oder Pressen des Kunststoffs seitlich hinter die Hinterschneidung des Einlegeteils, wird mittels eines Schiebers oder eines Unterdrucks oder eines Drucks der Kunststoff der Kunststoffplatte hinter der Hinterschneidung von seitlich beabstandet des Einlegeteils an das Einlegeteil gedrückt oder gesaugt, so dass ein Raum hinter der Hinterschneidung des Einlegeteils mit dem Kunststoff gefüllt wird.

Der Kunststoff der Kunststoffplatte, der mittels eines Schiebers oder eines Unterdrucks oder eines Drucks hinter der Hinterschneidung von seitlich beabstandet des Einlegeteils an das Einlegeteil gedrückt oder gesaugt wird, stammt bevorzugt aus Teilbereichen der Kunststoffplatte, die weniger oder nicht vorgestreckt wurden. Der weniger vorgestreckte und somit dickere Kunststoff kann zum Ausfüllen der Hinterschneidung stärker ausgedünnt werden.

Die Kunststoffplatte kann bevorzugt ein Mehrschichtverbund sein, wobei der Mehrschichtverbund bevorzugt eine Schicht aus HDPE und eine Barriereschicht, insbesondere EVOH, umfasst.

Vorzugsweise wird zur Herstellung eines Hohlkörpers, insbesondere eines Behälters, eine Halbschale hergestellt wie zuvor beschrieben, und die Halbschale mit einer weiteren Halbschale oder mit mindestens einem Zylinder und einer Endkappe verbunden, um einen geschlossenen Behälter zu bilden. Vorzugsweise werden beide Halbschalen des Hohlkörpers auf die zuvor beschriebene Weise hergestellt.

Der geschlossene Hohlkörper, insbesondere Behälter, wird bevorzugt mit einem Fasermaterial umwickelt, besonders bevorzugt mit einem Verbundwerkstoff umfassend Kohlefasern und/oder Glasfasern und/oder Epoxidharz.

### Kurzbeschreibung der Zeichnungen

Die Erfindung wird im Folgenden beispielhaft unter Bezugnahme auf die Zeichnungen beschrieben.

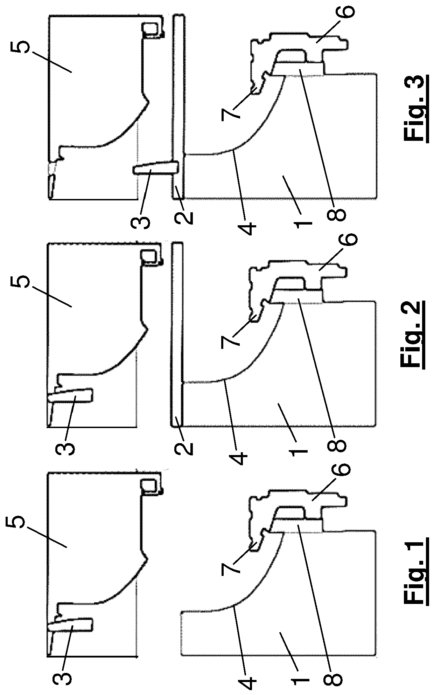

- Fig. 1-12: sind schematische Darstellungen von Schritten eines erfindungsgemäßen Verfahrens zur Herstellung einer Halbschale.

### Detaillierte Beschreibung der Erfindung

Die Fig. 1-12 zeigen Schritte eines erfindungsgemäßen Verfahrens zur Herstellung einer Halbschale für einen Hohlkörper, nämlich für einen Kunststoffbehälter, beispielsweise einen Kraftstoffbehälter für ein Kraftfahrzeug. Dabei ist jeweils nur die linke Hälfte der mit Bezug auf eine vertikale Achse spiegelsymmetrischen Anordnung dargestellt.

Fig. 1 zeigt eine Ausgangslage, wobei ein Werkzeug verwendet wird mit einer ersten, unteren Werkzeughälfte 1, die eine Matrize bildet zum Umformen einer Kunststoffplatte. Die erste Werkzeughälfte 1 weist dazu eine Kavität 4 auf, gegen welche ein Kunststoff gesaugt oder geblasen werden kann, um ihm die Form der Halbschale zu verleihen.

Das Werkzeug umfasst ferner eine zweite Werkzeughälfte 5, die oberhalb der ersten Werkzeughälfte 1 angeordnet ist, und die einen Stempel bildet. Die Form des Stempels der zweiten Werkzeughälfte 5 entspricht im Wesentlichen als Positivform der durch die Kavität 4 der ersten Werkzeughälfte 1 gebildeten Negativform. Die zweiten Werkzeughälfte 5 kann auf die erste Werkzeughälfte 1 gefahren werden, um später die innere Kontur der Halbschale auszubilden.

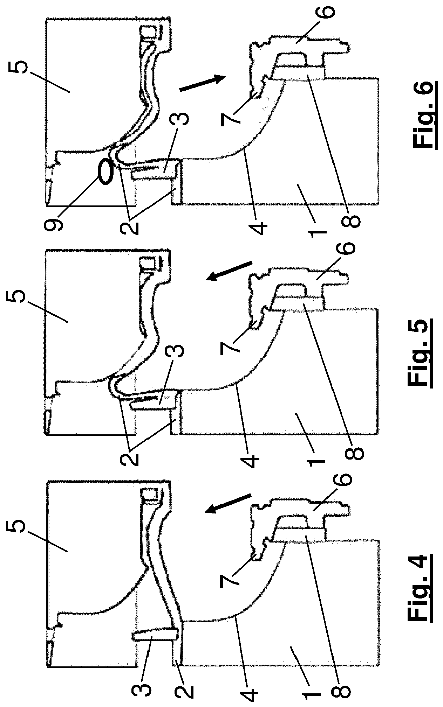

Die zweiten Werkzeughälfte 5 umfasst auch ein Rückhalteelement 3, mit einer kreisförmig umlaufenden, geschlossenen Form, also einer Ringform. Das Rückhalteelement 3 dient dazu, dass Teilbereiche einer aufgelegten Kunststoffplatte 2 (ab Fig. 2) durch das Rückhalteelement 3 zurückgehalten werden, so dass diese Teilbereiche der Kunststoffplatte 2 beim Wegblasen oder Wegsaugen der Kunststoffplatte 2 (ab Fig. 4) weniger oder nicht vorgestreckt werden.

In die erste Werkzeughälfte 1 ist in Fig. 1 bereits ein Einlegeteil 6, nämlich ein Bossteil für die herzustellende Halbschale, eingelegt. Das Einlegeteil 6 ist mittels eines Schiebers 8 der ersten Werkzeughälfte 1 in eine erhöhte Position gehoben, in der eine Hinterschneidung 7 des Einlegeteils 6, nämlich ein axialer Bereich des Einlegeteils 6 mit einem größeren Umfang als andere axiale Bereiche des Einlegeteils 6, oberhalb der Kavität 4 und beabstandet von dieser Kavität 4, angeordnet ist. In den beabstandeten Raum zwischen Hinterschneidung 7 und Kavität 4 kann später Kunststoff der aufgelegten Kunststoffplatte 2 eingebracht werden, um den Hinterschnitt zu füllen.

Wie in Fig. 2 dargestellt, wird eine vorgeheizte Kunststoffplatte 2 auf die erste Werkzeughälfte 1 aufgebracht, insbesondere aufgelegt. Die Kunststoffplatte 2 kann bereits vor dem Auflegen auf die erste Werkzeughälfte 1 erwärmt worden sein, bevorzugt auf etwa 230 Grad Celsius, oder auf der ersten Werkzeughälfte 1 erwärmt werden um diese Vorzuheizen, so dass die Kunststoffplatte 2 gut verformbar ist.

Die Kunststoffplatte 2 kann ein Mehrschichtverbund-Kunststoff sein, wobei der Mehrschichtverbund bevorzugt eine Schicht aus HDPE und eine Barriereschicht, insbesondere EVOH, umfasst.

In Fig. 3 wird das Rückhalteelement 3, ein ringförmiger Schieber der zweiten Werkzeughälfte 5, in eine Arbeitsposition an der Oberseite der Kunststoffplatte 2 ausgefahren, um die entsprechenden Bereiche der Kunststoffplatte beim nachfolgen Vorverstrecken des Kunststoffs zurück zu halten. Die Kunststoffplatte 2 wird durch das Rückhalteelement 3 umlaufend niedergedrückt und zur ersten Werkzeughälfte 1 hin abgedichtet.

In Fig. 4 beginnt schließlich das Vorstrecken des Kunststoffs der Kunststoffplatte 2 mittels Überdruck durch Einbringen einer Druckluft in Richtung des eingezeichneten Pfeils, von unten, zentral in der ersten Werkzeughälfte. Der Kunststoff wird daher nach oben, zur zweiten Werkzeughälfte 5 hin weggeblasen und gestreckt, in den Bereichen die radial innerhalb des Rückhalteelements 3 liegen.

Wie in Fig. 5 dargestellt, wirkt nun der Stempel der oberen, zweiten Werkzeughälfte 5 ebenfalls als Rückhalteelement, und bewirkt, dass zentral liegende Bereiche des Kunstoffs der Kunststoffplatte 2 weniger gestreckt werden. Am meisten wird daher ein ringförmiger Bereich der Kunststoffplatte 2 gestreckt, der zwischen Rückhalteelement 3 und zweiter Werkzeughälfte 5 liegt.

In dem in Fig. 6 dargestellten Schritt ist nun die maximale gewünschte Vorstreckung des Kunststoffs erreicht, was beispielsweise durch einen Sensor 9 an er zweiten Werkzeughälfte 5 detektiert werden kann, so wird der Überdruck beendet und stattdessen ein Unterdruck zwischen den beiden Werkzeughälften 1, 5 erzeugt, um den in Teilbereichen vorgestreckten Kunststoff der Kunststoffplatte 2 in die Kavität 4 der ersten Werkzeughälfte 1 zu saugen (in der in Fig. 6 eingezeichneten Pfeilrichtung).

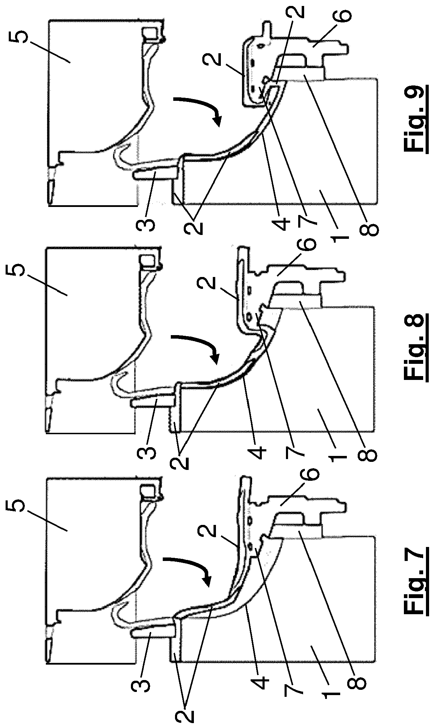

Wie in Fig. 7 bis Fig. 9 dargestellt, legt sich nun der zuvor oben an der zweiten Werkzeughälfte 5 befindliche Kunststoff (noch eingezeichnet in den Fig. 7 bis 9) in der Kavität 4 der ersten Werkzeughälfte 1 an (in Richtung des jeweils eingezeichneten Pfeils). Die Kunststoffplatte 2 wird also zumindest bereichsweise mittels Unterdruck an die erste Werkzeughälfte 1 gesaugt. Dabei legt sich vor allem das bereits vorgestreckte material der Kunststoffplatte 2 an der Kavität 4 an.

Wie in Fig. 8 dargestellt, ist der Kunststoff der Kunststoffplatte 2, nach dem Saugen oder Pressen des Kunststoffs mittels Unterdruck an die erste Werkzeughälfte 1, bereichsweise hinter der Hinterschneidung 7 des Einlegeteils 6 seitlich beabstandet vom Einlegeteil 6 angeordnet.

Fig. 9 zeigt schließlich, wie danach, mittels eines Schiebers oder eines Unterdrucks oder eines Drucks der Kunststoff der Kunststoffplatte 2 hinter der Hinterschneidung 7 von seitlich beabstandet des Einlegeteils 6 an das Einlegeteil 6 gedrückt oder gesaugt wird, so dass ein Raum hinter der Hinterschneidung 7 des Einlegeteils 6, zwischen Hinterschneidung 7 und Kavität 4, mit dem Kunststoff gefüllt wird. Der Kunststoff der hinter die Hinterschneidung 7 des Einlegeteils gedrückt oder gesaugt wird, stammt aus Bereichen der Kunststoffplatte 2, die weniger vorgestreckt wurden, so dass trotz Strecken des Materials hinter die Hinterschneidung, in Fig. 9, der Kunststoff dort eine ausreichende Wandstärke aufweist.

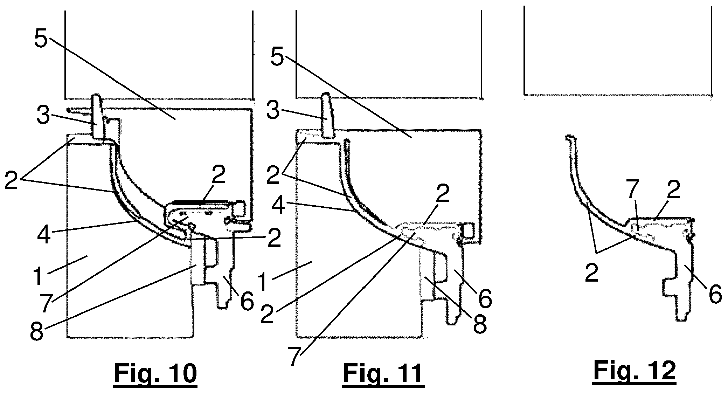

Wie in Fig. 10 dargestellt, wird dann die zweite Werkzeughälfte 5 vertikal nach unten, zur ersten Werkzeughälfte 1 hin, zugestellt. Die zweite Werkzeughälfte 5 wird an den Kunststoff der Kunststoffplatte 2 herangefahren, beispielsweise bis zu einem Kontakt mit dem Schieber 8 oder mit einem Bereich des Einlegeteils 6 (Fig. 10). Anschließend kann beispielsweise der Schieber 8 und somit das Einlegeteil 6 vertikal abgesenkt werden, Fig. 11, und dabei der Kunststoff im Bereich des Hinterschnitts, hinter der Hinterschneidung 7, verpresst bzw. verschweisst werden. Die zweite Werkzeughälfte kann dann wieder in die Ausgangsstellung angehoben werden und das fertige Bauteil (Fig. 12) aus dem Werkzeug entnommen werden, beispielsweise zum Abkühlen und/oder zur weiteren Verarbeitung. Insbesondere kann die fertige Halbschale mit einer weiteren Halbschale zu einem Hohlkörper, insbesondere Behälter, gefügt werden.

### Bezugszeichenliste

- 1: erste Werkzeughälfte
- 2: Kunststoffplatte
- 3: Rückhalteelement
- 4: Kavität
- 5: zweite Werkzeughälfte
- 6: Einlegeteil
- 7: Hinterschneidung
- 8: Schieber
- 9: Sensor

## Patentansprüche

1. Verfahren zur Herstellung einer Halbschale für einen Hohlkörper, wobei ein Werkzeug verwendet wird mit einer ersten Werkzeughälfte (1), die eine Matrize bildet, umfassend die Schritte:
- eine vorgeheizte Kunststoffplatte (2) wird auf die erste Werkzeughälfte (1) aufgebracht,
- die Kunststoffplatte (2) wird zumindest bereichsweise mittels Unterdruck oder Druck an die erste Werkzeughälfte (1) gesaugt oder gepresst,
**dadurch gekennzeichnet, dass** die Kunststoffplatte (2), bevor sie an die erste Werkzeughälfte (1) gesaugt oder gepresst wird, zumindest bereichsweise mittels Druck oder Unterdruck von der ersten Werkzeughälfte (1) weggeblasen oder weggesaugt wird, um das Material der Kunststoffplatte (2) zumindest bereichsweise vorzustrecken.

2. Verfahren nach Anspruch 1,
**dadurch gekennzeichnet, dass** vor dem Wegblasen oder Wegsaugen der Kunststoffplatte (2) von der ersten Werkzeughälfte (1), zumindest ein Rückhalteelement (3) an der Kunststoffplatte (2) angeordnet wird, so dass Teilbereiche der Kunststoffplatte (2) durch das Rückhalteelement (3) zurückgehalten werden, so dass diese Teilbereiche der Kunststoffplatte (2) beim Wegblasen oder Wegsaugen der Kunststoffplatte (2) weniger oder nicht vorgestreckt werden.

3. Verfahren nach Anspruch 2,
**dadurch gekennzeichnet , dass** das Rückhalteelement (3) eine umlaufende, geschlossene Form, insbesondere eine Ringform, aufweist, so dass die Teilbereiche der Kunststoffplatte (2), die beim Wegblasen oder Wegsaugen der Kunststoffplatte (2) weniger oder nicht vorgestreckt werden, eine umlaufende, geschlossene Form, insbesondere eine Ringform, aufweisen.

4. Verfahren nach Anspruch 3,
**dadurch gekennzeichnet , dass** die erste Werkzeughälfte (1) eine Kavität (4) aufweist, in welche die Kunststoffplatte (2) zumindest bereichsweise mittels Unterdruck oder Druck gesaugt oder gepresst wird, wobei das Rückhalteelement (3) um den Rand der Kavität (4) umlauft, so dass die Teilbereiche der Kunststoffplatte (2), die außerhalb der Kavität (4) liegen, beim Wegblasen oder Wegsaugen der Kunststoffplatte (2) weniger oder nicht vorgestreckt werden.

5. Verfahren nach zumindest einem der Ansprüche 2 bis 4,
**dadurch gekennzeichnet , dass** die erste Werkzeughälfte (1) eine Kavität (4) aufweist, in welche die Kunststoffplatte (2) zumindest bereichsweise mittels Unterdruck oder Druck gesaugt oder gepresst wird, wobei das Rückhalteelement (3) zentral über der Kavität (4) angeordnet ist, so dass Teilbereiche der Kunststoffplatte (2), die zentral in der Kavität (4) liegen, beim Wegblasen oder Wegsaugen der Kunststoffplatte (2) weniger oder nicht vorgestreckt werden.

6. Verfahren nach zumindest einem der vorhergehenden Ansprüche, **dadurch gekennzeichnet , dass** das Werkzeug eine zweite Werkzeughälfte (5) umfasst, die einen Stempel bildet und die zweiten Werkzeughälfte (5) auf die erste Werkzeughälfte (1) gefahren wird, um die innere Kontur der Halbschale auszubilden.

7. Verfahren nach zumindest einem der vorhergehenden Ansprüche, **dadurch gekennzeichnet , dass** die zweite Werkzeughälfte (5) zum Zeitpunkt des Wegblasens oder Wegsaugens so positioniert ist, dass für Teilbereiche der Kunststoffplatte (2) beim Wegblasen oder Wegsaugen der Kunststoffplatte (2) der Weg durch die zweite Werkzeughälfte (5) begrenzt wird, so dass diese Teilbereiche der Kunststoffplatte beim Wegblasen oder Wegsaugen der Kunststoffplatte (2) weniger oder nicht vorgestreckt werden.

8. Verfahren nach zumindest einem der vorhergehenden Ansprüche, **dadurch gekennzeichnet , dass** die Halbschale einen Einlegeteil (6) umfasst, wobei der Kunststoff der Kunststoffplatte (2), nach dem Saugen oder Pressen des Kunststoffs mittels Unterdruck oder Druck an die erste Werkzeughälfte (1), bereichsweise hinter einer Hinterschneidung (7) des Einlegeteils (6) seitlich beabstandet vom Einlegeteil (6) angeordnet ist.

9. Verfahren nach Anspruch 8,
**dadurch gekennzeichnet , dass** danach mittels eines Schiebers oder eines Unterdrucks oder eines Drucks der Kunststoff der Kunststoffplatte (2) hinter der Hinterschneidung (7) von seitlich beabstandet des Einlegeteils (6) an das Einlegeteil (6) gedrückt oder gesaugt wird, so dass ein Raum hinter der Hinterschneidung (7) des Einlegeteils (6) mit dem Kunststoff gefüllt wird.

10. Verfahren nach Anspruch 9,
**dadurch gekennzeichnet , dass** der Kunststoff der Kunststoffplatte (2), der mittels eines Schiebers oder eines Unterdrucks oder eines Drucks der Kunststoff der Kunststoffplatte (2) hinter der Hinterschneidung (7) von seitlich beabstandet des Einlegeteils (6) an das Einlegeteil (6) gedrückt oder gesaugt wird, in Teilbereichen der Kunststoffplatte (2) liegt, die weniger oder nicht vorgestreckt wurden.

11. Verfahren nach zumindest einem der vorhergehenden Ansprüche, **dadurch gekennzeichnet , dass** die Kunststoffplatte (2) ein Mehrschichtverbund ist, wobei der Mehrschichtverbund bevorzugt eine Schicht aus HDPE und eine Barriereschicht, insbesondere EVOH, umfasst.

12. Verfahren zur Herstellung eines Hohlkörpers, insbesondere eines Hochdruckbehälters, wobei eine Halbschale hergestellt wird durch ein Verfahren nach zumindest einem der vorhergehenden Ansprüche, wobei die Halbschale mit einer weiteren Halbschale oder mit mindestens einem Zylinder und einer Endkappe verbunden wird, um einen geschlossenen Behälter zu bilden.

13. Verfahren nach Anspruch 12,
**dadurch gekennzeichnet , dass** der geschlossene Hohlkörper mit einem Fasermaterial umwickelt wird, bevorzugt mit einem Verbundwerkstoff umfassend Kohlefasern und/oder Glasfasern und/oder Epoxidharz.
